# EUROPÄISCHE PATENTSCHRIFT

(11) **EP 1 391 331 B1**
(45) Veröffentlichungstag und Bekanntmachung des Hinweises auf die Patenterteilung: **27.06.2007**
(21) Anmeldenummer: 03018941.9
(22) Anmeldetag: 20.08.2003
(51) Int. Cl.: B60G 17/015, B61F 5/22, B61F 5/14, B60G 11/62

(54) **Hydropneumatisches Federelement mit integriertem Höhensensor oder Höhenregulierventil, für ein Schienenfahrzeug**
Hydropneumatic spring element with integrated leveling sensor or valve, for railway vehicle
Elément de ressort hydropneumatique, avec détecteur ou valve de nivellement intégré, pour véhicule ferroviaire

(30) Priorität: 20.08.2002 DE 10238059
(43) Veröffentlichungstag der Anmeldung: 25.02.2004
(73) Patentinhaber: Liebherr-Aerospace Lindenberg GmbH, 88161 Lindenberg/Allgäu (DE)
(72) Erfinder: Gaile, Anton, Dipl.-Ing., 88299 Leutkirch (DE)
(74) Vertreter: Laufhütte, Dieter

(56) Entgegenhaltungen:
- EP-A- 0 947 409
- EP-A- 1 006 036
- DE-A- 4 406 607
- DE-B- 1 177 438
- DE-U- 29 813 031
- GB-A- 870 414
- US-A- 5 769 400

## Beschreibung

Die vorliegende Erfindung betrifft ein Federelement mit einem hydropneumatischen Federbein zur Anordnung zwischen Drehgestell und Wagenkasten eines Schienenfahrzeuges, wobei das Federbein einen in einem Zylinder verschieblich aufgenommenen Kolben umfaßt, wobei der Kolben oder der Zylinder mit dem Drehgestell und das andere der Bauteile mit dem Wagenkasten verbindbar ist und wobei der Kolbenraum des Zylinders mit einem Druckspeicher in Verbindung steht. Ein derartiges Federelement ist beispielsweise aus der WO 94/22702 bekannt.

Derartige im allgemeinen als Sekundärfederelemente dienende Federelemente sind in zahlreichen unterschiedlichen Ausführungsformen bekannt. Es ist bekannt, die Federbeinhöhe und damit die Fahrzeughöhe zu regeln, wobei zwischen Wagenkasten und Drehgestell angeordnete Höhensensoren verwendet werden, mittels derer über einen Regelkreis die gewünschte Fahrzeughöhe eingestellt wird. Derartige Sensoren unterliegen zum einen einer erheblichen Verschmutzung und sind zum anderen derart angeordnet, daß deren Wechsel das Zerlegen oder zumindest den Ausbau des Federbeins bedingen. Vorbekannten Höhensensoren haftet zudem der Nachteil an, daß bei einem Radverschleißausgleich eine Neujustierung der Sensoreinstellung erfolgen muß.

Aus der U.S. 5,769,400 ist ein System mit einem HP-Federbein bekannt, das dann aus einem Hydraulikspeicher versorgt wird, wenn die Pumpenleistung nicht ausreicht. Der Hydraulikspeicher wird während des normalen Betriebes aufgeladen und steht dann zur Versorgung des HP-Federbeins zur Verfügung.

Aus der EP 1 006 036 ist ein Federsystem mit einer Luftfeder zwischen Wagenkasten und Fahrwerksrahmen sowie mit einer federbelasteten Notauflage bekannt, deren Höhenlage mittels zweier Sensoren erfaßt wird.

Die EP 0 947 409 offenbart ein Federsystem mit einem hydropneumatischen Federbein und einer zu diesem konzentrisch angeordneten passiven Notfeder, die mechanisch vorgespannt ist. Hierzu ist ein sogenannter Begrenzungsanschlag vorgesehen, der am Fahrwerksrahmen festliegt und die Notfeder unter Vorspannung hält.

Es ist die Aufgabe der vorliegenden Erfindung, ein Federelement der eingangs genannten Art bereitzustellen, das bedienungs- und wartungsfreundlich ist und keiner nennenswerten Verschmutzung unterliegt.

Diese Aufgabe wird durch ein Federelement mit den Merkmalen des Anspruchs 1 gelöst. Das hydropneumatische Federbein umfasst ein hydraulisches Höhenregulierventil oder einen mit einem Regelkreis in Verbindung stehenden oder verbindbaren Höhensensor, mittels derer die Position des Kolbens in dem Zylinder regelbar oder erfassbar ist. Erfindungsgemäß ist der Höhensensor bzw. das Höhenregulierventil im Federbein integriert, was beispielsweise dadurch möglich ist, daß der Höhensensor oder das Höhenregulierventil in dem Zylinderkopf des Federbeins eingesteckt und dort verschraubt ist. Bei geeigneter Positionierung des Höhensensors oder des Höhenregulierventils läßt sich ein problemloser Austausch oder Wartung erzielen, ohne daß das Federbein selbst demoniert oder ausgebaut werden müßte. Aufgrund der Erfassung der Kolbenposition ist es nicht erforderlich, den Höhensensor nachzustellen, wenn der Radverschleiß ausgeglichen wird.

Das Höhenregulierventil und der Höhensensor können eine mechanische Rückführung aufweisen, die ausschließlich oder auch im Einstellbereich des Federbeins ein von der Position des Kolbens abhängiges Signal abgibt.

Besonders vorteilhaft ist es, wenn die mechanische Rückführung ausschließlich im Einstellbereich des Federbeins ein von der Position des Kolbens abhängiges Signal abgibt, während die Position der mechanischen Rückführung oberhalb und unterhalb des Einstellbereichs konstant ist. Befindet sich das Federbein außerhalb des Einstellbereichs, wird nur festgestellt, ob sich das Federbein oberhalb oder unterhalb des Einstellbereichs befindet. Mittels dieser Information kann die Regelung das Federbein in den Einstellbereich stellen und die Fahrzeughöhe ausregeln. Durch diese einfache Art der mechanischen Signalverstärkung ist es zum einen möglich, einen Sensor mit sehr kurzem Hub zu verwenden, zum anderen kann die mechanische Rückführung so angebracht werden, daß sie leicht wechselbar ist. Durch den kurzen Meßweg reduziert sich zudem die Baugröße des Sensors bzw. des Höhenregulierventils erheblich.

In bevorzugter Ausgestaltung ist der Hub der mechanischen Rückführung proportional zur Position des Kolbens im Einstellbereich.

Der Kolben kann einen zumindest abschnittsweise konisch ausgeführten Ansatz aufweisen, wobei die mechanische Rückführung des Höhenregulierventils bzw. des Höhensensors mit der Oberfläche des Ansatzes zumindest in dem konischen Bereich in Berührung steht und eine von der Position des Ansatzes abhängige Auslenkung erfährt.

In weiterer Ausgestaltung der vorliegenden Erfindung ist vorgesehen, daß im Zylinderkopf eine sich in Längsrichtung des Zylinders erstreckende Bohrung angeordnet ist und daß die mechanische Rückführung des Höhenregulierventils oder des Höhensensors in einer sich dazu senkrecht erstreckenden Bohrung des Zylinderkopfes befindet.

Ferner kann eine Notfeder vorgesehen sein, die in das Federbein derart integriert ist, daß die Baulänge des Federbeins durch die Notfeder nicht vergrößert wird. Durch diese Ausführungsform wird ein Federelement bereitgestellt, das bei minimalem Platzbedarf ein Maximum an Funktionen zur Verfügung stellt.

Erfindungsgemäß ist vorgesehen, dass die Notfeder und das Federbein konzentrisch angeordnet sind und die Notfeder den Zylinder des Federbeins umgibt. Hierdurch steht für die Notfeder ein relativ langer Einbauraum mit einem großen Durchmesser zur Verfügung, der es ermöglicht, ein Federelement (Gummi-, Schrauben- oder Tellerfeder) mit sehr weicher Kennlinie unterzubringen. Ein weiterer Vorteil besteht darin, daß die Notfeder vorgespannt werden kann, z.B. auf Fahrzeugleergewicht. Bei dieser Ausführungsform ist die Notfeder zudem frei von Querkräften und Querbewegungen.

Wie oben ausgeführt, kann die Notfeder vorgespannt sein, beispielsweise auf Fahrzeugleergewicht oder einen Teil des Fahrzeugleergewichtes oder auch auf maximales Fahrzeuggewicht.

Erfindungsgemäß ist ferner vorgesehen, daß die Notfeder mittels eines Hydraulikzylinders vorgespannt ist.

Dadurch ergibt sich die Möglichkeit, die Notfeder je nach Bedarf vorzuspannen. Beispielsweise kann die Notfeder im normalen Betriebsfall per Hydraulikdruck auf maximales Fahrzeuggewicht vorgespannt werden. Hierdurch ergibt sich die Möglichkeit, das Fahrzeug im Normalbetrieb unter die Notfederhöhe abzusenken, was in bestimmten Anwendungsfällen erwünscht ist. Fällt der Hydraulikdruck im Fehlerfall ab, wird die Feder aufgrund des Druckabfalls im Hydraulikzylinder abgesenkt und steht für den Notbetrieb zur Verfügung.

Wenn der Hydraulikzylinder mit dem Kolbenraum des Zylinders des Federbeins in Verbindung steht, wird bei einem Druckabfall im Kolbenraum des Zylinders des Federbeins automatisch auch der Druck im Hydraulikzylinder der Notfeder gesenkt, wodurch die Notfeder freigeschaltet wird. Dabei ist sicherzustellen, daß bei minimaler Betriebslast (Betriebsdruck) die Notfeder noch komplett vorgespannt ist, was über eine geeignete Wahl der Kolbenfläche des Hydraulikzylinders der Notfeder geschehen kann.

Weitere Einzelheiten und Vorteile der vorliegenden Erfindung werden anhand eines in der Figur dargestellten Ausführungsbeispiels näher erläutert. Es zeigen:
- Fig.1:: Längsschnittdarstellung durch ein HP-Federbein mit mechanischem Endanschlag in einer ersten Ausführungsform,
- Fig .2:: Längsschnittdarstellung durch ein HP-Federbein mit hydraulischem Endanschlag in einer ersten Ausführungsform,
- Fig. 3:: Systemschaubild der elektronischen Regelung der Kolbenposition eines HP-Federbeins in einer ersten Ausführungsform,
- Fig. 4:: Systemschaubild der mechanisch-hydraulischen Regelung der Kolbenposition eines HP-Federbeins in einer ersten Ausführungsform,
- Fig. 5:: Längsschnittdarstellung durch ein HP-Federbein in einer zweiten Ausführungsform,
- Fig. 6:: vergrößerte Darstellung eines HP-Federbeins in einer zweiten Ausführungsform,
- Fig. 7:: Systemschaubild der elektronischen Regelung der Kolbenposition eines HP-Federbeins in einer zweiten Ausführungsform mit manuellem Radverschleißausgleich,
- Fig. 8:: Systemschaubild der elektronischen Regelung der Kolbenposition eines HP-Federbeins in einer zweiten Ausführungsform mit automatischem Radverschleißausgleich und
- Fig. 9:: Systemschaubild der elektronischen Regelung der Kolbenposition eines HP-Federbeins in einer zweiten Ausführungsform mit hydraulischem Notfederspeicher.

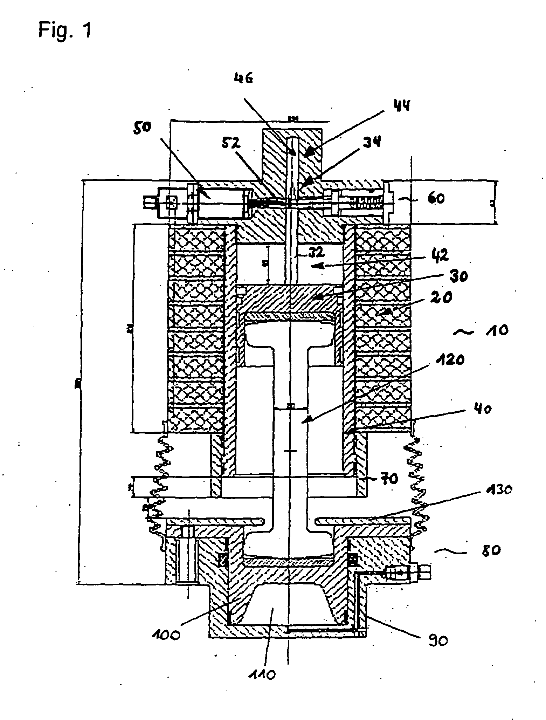

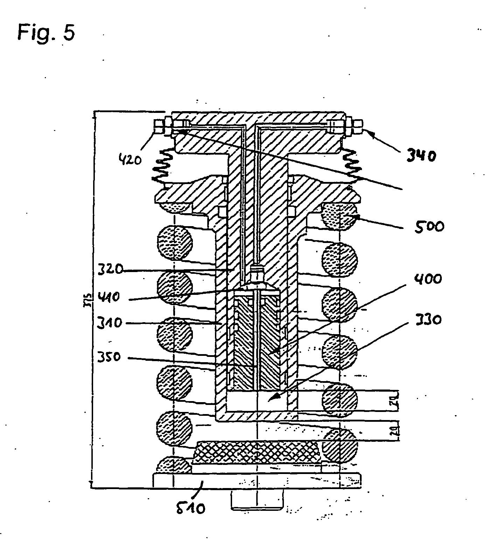

Die in Fig. 1 und in Fig. 5 - Fig.9 dargestellten Anordnungen fallen nicht in den Schutzbereich der vorliegenden Erfindung.

Fig. 1 zeigt in einer Längsschnittdarstellung ein Federelement 10 mit einer Notfeder 20 und einem hydropneumatischen Federbein (HP-Federbein) zur Anordnung zwischen Drehgestell und Wagenkasten eines Schienenfahrzeuges. Das HP-Federbein weist den Kolben 30 auf, der längsverschieblich in dem Zylinder 40 geführt ist. In dem Druckraum 42 des Zylinders 40 befindet sich ein Hydraulikmedium, vorzugsweise Öl, das über den Anschluß 60 mit einem Druckspeicher in Verbindung steht. Die Notfeder 20 umgibt den Zylinder 40 des HP-Federbeins.

In dem Zylinderkopf 44 ist ein Höhensensor 50 aufgenommen, dessen mechanische Rückführung (Weggeber) 52 in horizontaler Richtung beweglich ausgeführt ist. In dem Zylinderkopf 44 befindet sich ferner die vertikale Bohrung 46, in der ein mit dem Kolben 30 verbundener Ansatz 32 beweglich aufgenommen ist. Der Ansatz 32 weist den konisch verlaufenden Bereich 34 auf.

Der Zylinder 40 weist in seinem unteren Endbereich den Ring 70 auf, der gegen einen Reibungswiderstand relativ zum Zylinder 40 bis zu einem Anschlag bewegbar ist, der den Ring 70 in einer untersten Position hält. Der Ring 70 wird durch die Notfeder 20 auf den Anschlag des Zylinders 40 gedrückt. Die Notfeder 20 ist auf ca. 90 % des Fahrzeugleergewichtes vorgespannt.

Im unteren Bereich von Fig. 1 ist die Verstelleinheit 80 dargestellt, die einen Zylinder 90 sowie einen darin verschieblich aufgenommenen Kolben 100 aufweist. Der Kolben 100 sowie der Zylinder 90 begrenzen einen Kolbenraum 110, in den ein unter Druck stehendes Medium einführbar ist. Zwischen dem Kolben 100 der Verstelleinheit 80 und dem Kolben 30 des HP-Federbeins befindet sich die Pendelstütze 120, die das HP-Federbein derart abstützt, daß auch Querbewegungen möglich sind.

Auf der zum HP-Federbein gerichteten Seite des Kolbens 100 weist dieser die Anschlagplatte 130 auf.

Während des Betriebes greift die mechanische Rückführung 52 des Höhensensors 50 die Oberfläche des Ansatzes 32 des Kolbens 30 ab. In dem konisch ausgeführten Bereich 34 wird die mechanische Rückführung 52 proportional zur vertikalen Auslenkung des Ansatzes 32 und damit zur Position des Kolbens 30 bewegt. Oberhalb und unterhalb des Bereiches 34 ändert sich die Position der mechanischen Rückführung 52 nicht, wenn der Ansatz 32 bewegt wird. In diesen Bereichen meldet der Höhensensor 50 lediglich, daß sich der Ansatz 32 oberhalb oder unterhalb des durch den konischen Bereich 34 definierten Einstellbereiches befindet. Mittels dieser Information kann die Regelung das Federbein in den Einstellbereich stellen und hier die gewünschte Position einregeln. Durch diese einfache Art der mechanischen Signalverstärkung ist es zum einen möglich, einen Sensor 50 mit sehr kurzem Hub (Arbeitshub des Federbeins +/- 50 mm; Hub des Weggebers +/- 5 mm) zu verwenden. Zum anderen kann die mechanische Rückführung 52 so angebracht werden, daß sie leicht auswechselbar ist.

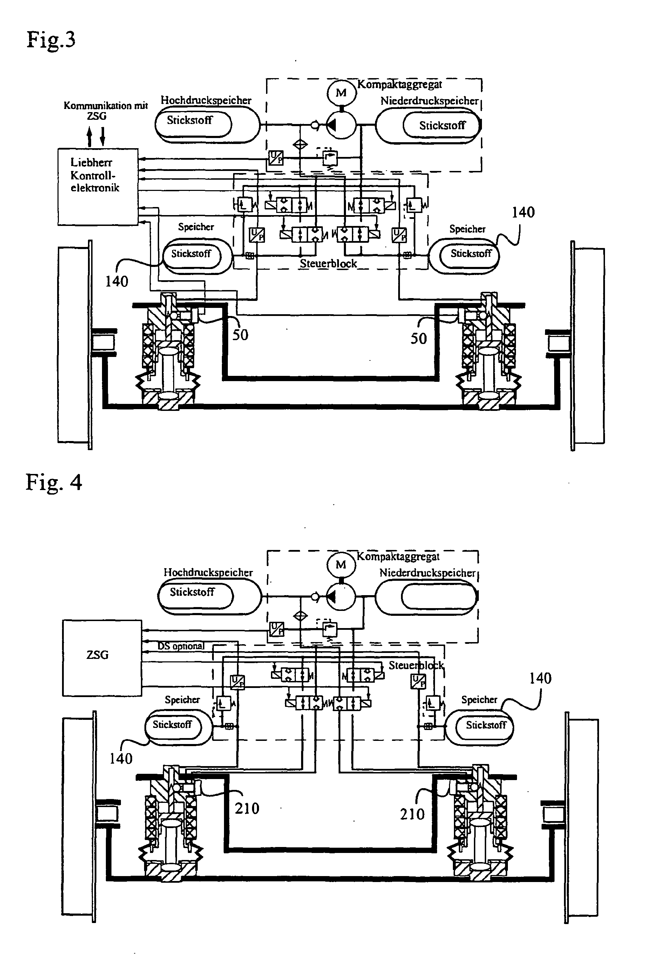

Die Regelung erfolgt mittels des aus Fig. 3 ersichtlichen Hydraulikkreises. Meldet der Höhensensor 50, daß die aktuelle Position des Kolbens 30 nicht dem Sollwert entspricht, wird das Ölvolumen im Kolbenraum 42 erhöht oder verringert. Durch die Anbindung des Kolbenraums 42 bzw. des damit in Verbindung stehenden Druckspeichers 140 an den Hochdruckspeicher wird das Ölvolumen im Kolbenraum 42 erhöht, durch eine Anbindung an den Niederdruckspeicher erfolgt eine Verringerung des Ölvolumens. Der Kolbenraum 42 der HP-Federbeine steht mit dem Druckspeicher 140 in Verbindung, in dem sich unter Druck stehendes Hydraulikfluid sowie ein vorgespanntes Stickstoffvolumen befindet. Eine derartige "Stickstoffeder" findet sich ferner in dem Hochdruckspeicher, der mittels einer Pumpe mit Öl aus dem Niederdruckspeicher versorgt wird.

Die Ansteuerung der Magnetventile übernimmt eine Kontrollelektronik, die mit den von den Höhensensoren 50 ermittelten Istwerten der Kolbenposition versorgt wird.

Die Höheneinstellung erfolgt mittels des in Fig. 3 dargestellten digitalen Regelkreises. Stimmt der von den Höhensensoren 50 ermittelte Istwert der Kolbenposition mit dem Sollwert überein, erfolgt keine Änderung des Ölvolumens und die Magnetventile befinden sich in der Schließposition. Ist die Fahrzeughöhe zu gering, wird mittels der Magnetventile der Hochdruckspeicher mit dem Kolbenraum 42 verbunden, wodurch die Ölmenge im Kolbenraum 42 ansteigt und das Fahrzeug angehoben wird. Ist die gemessene Fahrzeughöhe zu groß, wird der Kolbenraum 42 mittels der Magnetventile an den Niederdruckspeicher angeschlossen und die erforderliche Ölmenge aus dem Kolbenraum 42 abgezogen.

Es besteht die Möglichkeit, durch Softwareänderung nahezu beliebige Regelalgorithmen zu realisieren. Auch ist ein Primärfederausgleich möglich. Desweiteren bietet das System die Möglichkeit, Raddurchmesseränderungen im Bereich von bis 20 mm automatisch auszugleichen (Raddurchmesser wird über ZSG eingegeben). Durchmesseränderungen > 20 mm werden manuell mittels Handpumpe ausgeglichen.

Bei dem in Fig. 3 dargestellten System wird das Fahrzeugniveau mittels zweier Weggeber 52 ermittelt.

Im Fehlerfall (z.B. Druckabfall im Hydrauliksystem der HP-Federbeine) übernimmt die Notfeder 20 gemäß Fig. 1 die Federung. Der Ring 70 setzt bei Verringerung der Ölmenge im Kolbenraum 42 auf die Anschlagplatte 130 auf. Die Bewegungen des Zylinders 40 und somit des Wagenkastens bzw. Drehgestells werden gegenüber der Anschlagplatte 130 sodann mittels der Notfeder 20 abgefedert. Im Normalbetrieb steht die Notfeder 20 nicht in Eingriff.

Zum Ausgleich des Radverschleißes wird die in Fig. 1 dargestellte Verstelleinheit 80 betätigt. Diese weist den Kolben 100 auf, dessen Kolbenraum 110 mit einem Hydraulikmedium beaufschlagt wird. Dadurch wird der Kolben 100 sowie mittels der Pendelstütze 120 das gesamte HP-Federbein nach oben verfahren, bis die gewünschte Höhe erreicht ist. Nach diesem Einstellvorgang ist weder eine Neujustierung des Höhensensors noch der Notfederhöhe erforderlich.

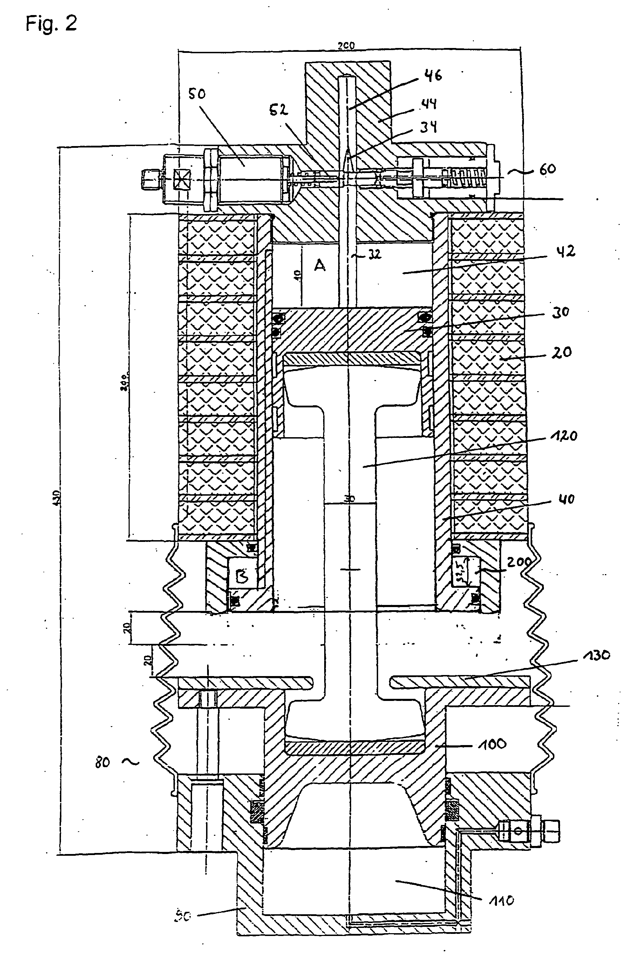

Fig. 2 zeigt die erfindungsgemäße Ausführungsform des HP-Federbeins, bei der der Endanschlag der Notfeder 20 hydraulisch ausgestaltet ist. Gleiche Teile sind in Fig. 2 mit denselben Bezugsziffern wie in Fig. 1 gekennzeichnet. Der hydraulische Endanschlag umfaßt einen Hydraulikzylinder 200, der über eine eigene Druckversorgung verfügt oder mit dem Drucksystem des HP-Federbeins in Verbindung steht. Mittels des Hydraulikzylinders 200 ist die Notfeder 20 auf einen beliebigen Wert vorspannbar. Im vorliegenden Ausführungsbeispiel ist die Notfeder 20 auf das maximale Fahrzeuggewicht vorgespannt. Hierdurch ergibt sich die Möglichkeit, das Fahrzeug im Normalbetrieb unter die Notfederhöhe abzusenken, was in bestimmten Anwendungsfällen erwünscht ist. Fällt der Hydraulikdruck ab, senkt sich die Notfeder automatisch ab und steht sodann für den Notbetrieb zur Verfügung. Bei Anbindung des Hydraulikzylinders 200 (Raum B) an den Kolbenraum 42 (Raum A) der HP-Feder wird die Notfeder 20 bei Druckabfall im Kolbenraum 42 freigeschaltet.

Ferner zeigt Fig. 2 die Verstelleinheit 80 in einer Position, in der der Kolben 100 mittels eines geeigneten in dem Kolbenraum 110 befindlichen Druckmediums in dem Zylinder 90 nach oben bewegt wurde. Durch diese Anordnung läßt sich der Radverschleiß problemlos ausgleichen. Dabei wird das gesamte Federbein nach oben verschoben. Eine Neujustierung des Höhensensors oder eines Höhenregulierventils sowie die Neueinstellung der Notfederhöhe sind nicht erforderlich.

Fig. 4 zeigt ein Systemschaubild mit mechanisch-hydraulischer Regelung der Kolbenposition eines HP-Federbeins gemäß Fig. 1. Anstelle des Höhensensors 50 ist ein mechanisch-hydraulisches Höhenregulierventil 210 in das HP-Federbein integriert, wodurch der Vorteil erzielt wird, daß kein separater Regelkreis erforderlich ist. Das Ventil 210 ist an den Hochdruck- sowie an den Niederdruckspeicher angeschlossen und regelt mittels einer mechanischen Rückführung der Position des Kolbens 30 das Ölvolumen im Kolbenraum 42 so lange, bis die Fahrzeughöhe dementsprechend ihren Sollwert erreicht hat. Dieses System ist kostengünstiger als das in Fig. 1 dargestellte, ermöglicht jedoch keinen Primärfederausgleich. Die Anordnung der mechanischen Rückführung sowie die Ausführung des Ansatzes des Kolbens entsprechen der zu Fig. 1 erläuterten.

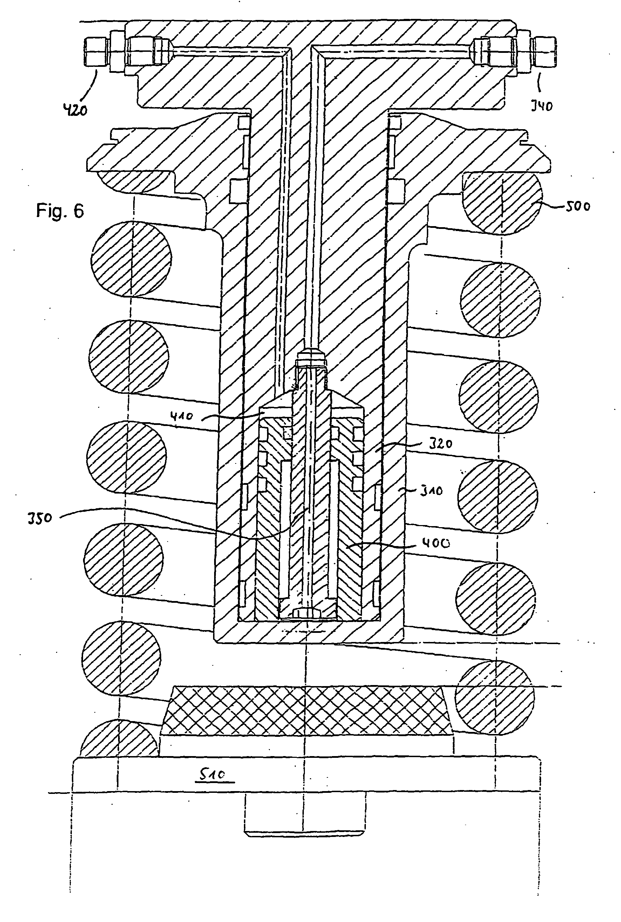

Die Fig. 5 und 6 zeigen ein eine Längsschnittdarstellung durch ein Federelement mit HP-Federbein.

Das HP-Federbein umfaßt den Zylinder 310 sowie den Kolben 320, der in dem Zylinder 310 längsverschieblich geführt ist. Der Kolben 320 weist in seinem zum Kolbenraum 330 gerichteten Endbereich eine Ausnehmung auf, in der das Anschlagelement 400 aufgenommen ist. Das Anschlagelement 400 ist relativ zum Kolben 320 längsverschieblich ausgeführt. Oberhalb des Anschlagelementes 400 befindet sich der weitere Kolbenraum 410, der über den Anschluß 420 mit einem Druckfluid beaufschlagbar ist. Dieses Druckfluid kann, muß jedoch nicht dem Hydraulikmedium des HP-Federbeins entsprechen, das vorzugsweise aus Öl besteht. Der Kolbenraum 330 steht mit der Druckversorgung des HP-Federbeins in Verbindung. Der Anschluß an die Druckversorgung ist mit dem Bezugszeichen 340 gekennzeichnet.

In Reihe zu dem HP-Federbein ist die Schraubenfeder 500 geschaltet, die sich einerseits an einem Vorsprung des Zylinders 310 und andererseits an einer Endplatte 510 abstützt. Im Normalbetrieb des Fahrzeuges sind beide Federelemente, d.h. das HP-Federbein und die Feder 500 in Eingriff, d.h. nehmen an der Abfederung des Fahrzeuges teil.

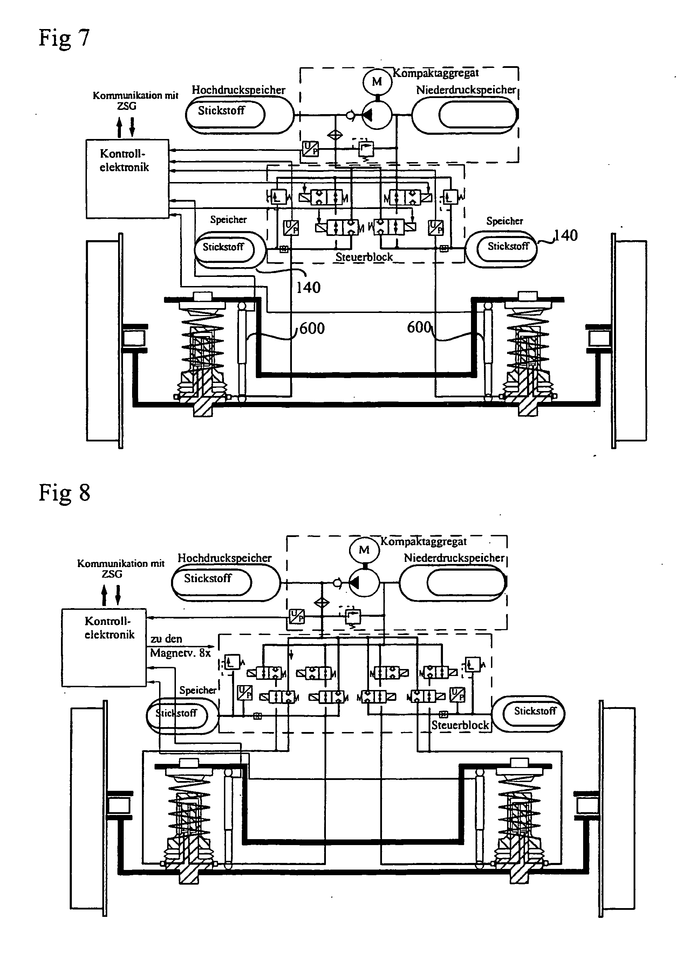

Die Regelung der gewünschten Fahrzeughöhe erfolgt mittels der aus Fig. 7 ersichtlichen Systemkonfiguration. In der bereits zu Fig. 3 erläuterten Weise wird das Ölvolumen in dem Kolbenraum 330 auf den gewünschten Wert eingeregelt. Als Istwertgeber dient ein im Bereich neben den Federbeinen angeordnetes Wegmeßsystem 600, das die Höhe des Federbeins ermittelt.

Wie zu Fig. 5 erläutert und wie aus der vergrößerten Darstellung gemäß Fig. 6 ersichtlich, ist das Anschlagelement 400 längsverschieblich im Endbereich des Kolbens 320 angeordnet. Zum Zwecke des Radverschleißausgleiches wird in den oberhalb des Anschlagelementes 400 befindlichen Kolbenraum 410 ein Hydraulikmedium geführt, wodurch sich der Kolben 320 relativ zum Anschlagelement 400 bewegt und die Fahrzeughöhe entsprechend vergrößert wird. Diese entspricht der Notfederhöhe, die sich ergibt, wenn es in dem Hydrauliksystem zu einem Fehlerfall kommt, der mit einem Druckverlust im HP-Federbein einhergeht. Das Einführen des Hydraulikmediums über den Anschluß 420 kann manuell mittels Handpumpe oder automatisch mittels eines Regelkreises erfolgen.

Nach Einstellung der gewünschten Notfederhöhe wird das Hydrauliksystem in Betrieb genommen und die Fahrzeughöhe auf den gewünschten Wert eingeregelt. Zu diesem Zweck wird Hydaulikmedium durch die Leitung 350 in den Kolbenraum 330 eingeführt, bis der Sollwert der Fahrzeughöhe erreicht ist.

Fig. 8 zeigt das Hydrauliksystem mit vollautomatischem Radverschleißausgleich. Der Raddurchmesser wird über die ZSG eingegeben. Die Regelelektronik gleicht dann bei jedem Aufrüsten des Fahrzeuges automatisch die Notfederhöhe mit vorgegebenen Raddurchmessern ab.

Der Anschluß des Kolbenraums 410 an den Hochdruckspeicher sowie an den Nierderdruckspeicher (gestrichelte Linie in Fig. 8) ergibt sich aus Fig 8 und erfolgt mittels der von der Kontrollelektronik angesteuerten Magnetventile.

Im Fehlerfall, der zu einem Druckverlust im HP-Federbein führt, setzt des Anschlagelement 400 auf den Endbereich des Zylinders 310 auf. Die Federung wird nun ausschließlich von der Feder 500 übernommen. Sie dient somit nicht nur als aktives Federelement während des Normalbetriebes, sondern auch als Notfederelement, so daß eine weitere Notfeder an sich nicht erforderlich ist.

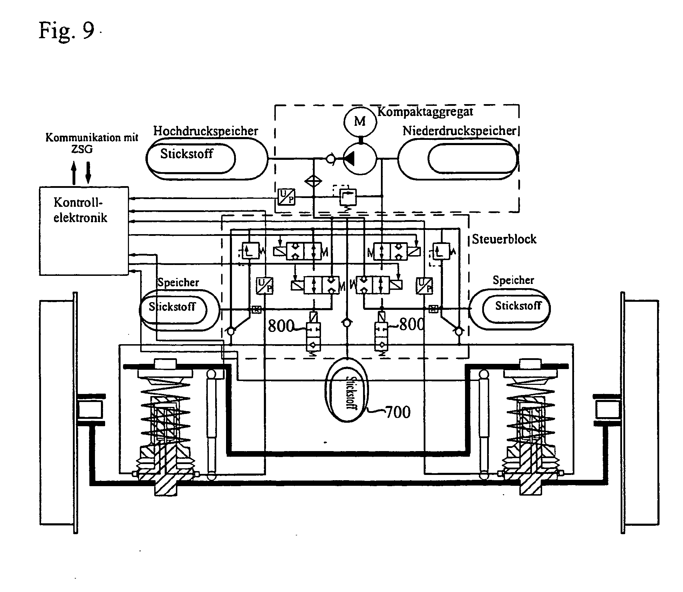

Soll das Fahrzeug im Normalbetrieb unter die Notfederhöhe abgesenkt werden, ist auch bei dieser Ausführung des Federelementes die Anordnung einer hydraulisch vorgespannten Notfeder möglich. Fig. 9 zeigt das entsprechende Hydraulikschaltbild. Der Kolbenraum 410 ist mit einem Notfederspeicher 700 verbindbar, der unter Druck stehendes Hydraulikmedium sowie ein kompressibles Gas, vorzugsweise Stickstoff umfaßt, das den Notfederspeicher 700 vorspannt. Im Normalbetrieb ist die Verbindung zwischen Speicher 700 und den Federbeinen mittels entsprechender Schaltstellung der Druckventile 800 unterbrochen. Herrscht im System der normale Hydraulikdruck, bewirkt dieser, daß die Druckventile 800 nach unten in die Schließstellung bewegt und dort gehalten werden. Fällt der Druck im System ab, öffnen die federbelasteten Druckventile 800 durch Umschaltung in die aus Fig. 9 ersichtliche Position. In dieser Position steht der Speicher 700 mit dem Kolbenraum 410 in Verbindung und es strömt Hydraulikmedium aus dem Speicher 700 in den Kolbenraum 410. Hierdurch wird der Kolben bis zur Ausschlagbegrenzung ausgeschoben, wodurch das Fahrzeug auf Notfederhöhe angehoben wird. Herrscht der normale Systemzustand, liegt der Rücklauf am Kolben an; herrscht kein Systemdruck, liegt der Druck des Speichers 700 am Kolben an.

## Patentansprüche

1. Federelement (10) mit einem hydropneumatischen Federbein zur Anordnung zwischen Drehgestell und Wagenkasten eines Schienenfahrzeuges, wobei das Federbein einen in einem Zylinder (40) verschieblich aufgenommenen Kolben (30) umfaßt, wobei der Kolben (30) oder der Zylinder (40) mit dem Drehgestell und das andere der Bauteile mit dem Wagenkasten verbindbar ist und wobei der Kolbenraum (42) des Zylinders (40) mit einem Druckspeicher (140) in Verbindung steht,
**dadurch gekennzeichnet,**
**daß** das hydropneumatische Federbein ein hydraulisches Höhenregulierventil (210) oder einen mit einem Regelkreis in Verbindung stehenden oder verbindbaren Höhensensor (50) umfaßt, mittels derer die Position des Kolbens (30) in dem Zylinder (40) regelbar oder erfaßbar ist,
wobei eine Notfeder (20) vorgesehen ist, die zu dem Federbein konzentrisch angeordnet ist und den Zylinder (40) des Federbeins umgibt,
und wobei die Notfeder (20) mittels eines Hydraulikzylinders (200) vorgespannt ist, der mit dem Kolbenraum (42) des Zylinders (40) des Federbeins in Verbindung steht.

2. Federelement nach Anspruch 1, **dadurch gekennzeichnet, daß** das Höhenregulierventil (210) und der Höhensensor (50) eine mechanische Rückführung (52) aufweisen, welche ausschließlich oder auch im Einstellbereich des Federbeins eine von der Position des Kolbens (30) abhängige Zustandsänderung erfährt.

3. Federelement nach Anspruch 2, **dadurch gekennzeichnet, daß** die mechanische Rückführung (52) ausschließlich im Einstellbereich des Federbeins ein von der Position des Kolbens (30) abhängiges Signal abgibt, während die Position der mechanischen Rückführung (52) oberhalb und unterhalb des Einstellbereichs konstant ist.

4. Federelement nach einem der vorhergehenden Ansprüche, **dadurch gekennzeichnet, daß** der Kolben (30) einen zumindest abschnittsweise konisch ausgeführten Ansatz (32) aufweist, und daß das Höhenregulierventil (210) und der Höhensensor (50) eine mechanische Rückführung (52) aufweisen, die mit der Oberfläche des Ansatzes (32) zumindest in dem konischen Bereich (34) in Berührung steht und eine von der Position des Ansatzes (32) abhängige Auslenkung erfährt.

5. Federelement nach einem der Ansprüche 2 bis 4, **dadurch gekennzeichnet, daß** im Zylinderkopf (44) eine sich in Längsrichtung des Zylinders (40) erstreckende Bohrung (46) angeordnet ist und daß sich die mechanische Rückführung (52) des Höhenregulierventils (210) oder des Höhensensors (50) in einer sich dazu senkrecht erstreckenden Bohrung des Zylinderkopfes (44) befindet.

6. Federelement nach einem der vorhergehenden Ansprüche, **dadurch gekennzeichnet, daß** die Notfeder (20) in das Federbein derart integriert ist, daß die Baulänge des Federbeins durch die Notfeder (20) nicht vergrößert wird.

## Claims

1. A spring element (10) with a hydropneumatic spring strut for arrangement between bogie and vehicle body of a rail vehicle, wherein the spring strut comprises a piston (30) slidably accommodated in a cylinder (40), wherein the piston (30) or the cylinder (40) can be connected with the bogie and the other one of the components can be connected with the vehicle body, and wherein the piston space (42) of the cylinder (40) is connected with a pressure accumulator (140),
**characterized in**
**that** the hydropneumatic spring strut comprises a hydraulic height-regulating valve (210) or a height sensor (50) connected or connectable with a control circuit, by means of which the position of the piston (30) in the cylinder (40) can be controlled or detected,
wherein an emergency spring (20) is provided, which is arranged concentrically with respect to the spring strut and surrounds the cylinder (40) of the spring strut,
and wherein the emergency spring (20) is prestressed by means of a hydraulic cylinder (200), which is connected with the piston space (42) of the cylinder (40) of the spring strut.

2. The spring element according to claim 1, **characterized in that** the height regulating valve (210) and the height sensor (50) have a mechanical recirculation (52), which exclusively or also within the range of adjustment of the spring strut undergoes a change of state dependent on the position of the piston (30).

3. The spring element according to claim 2, **characterized in that** exclusively within the range of adjustment of the spring strut the mechanical recirculation (52) provides a signal dependent on the position of the piston (30), whereas the position of the mechanical recirculation (52) above and below the range of adjustment is constant.

4. The spring element according to any of the preceding claims, **characterized in that** the piston (30) includes a projection (32), at least portions of which are conical, and that the height regulating valve (210) and the height sensor (50) include a mechanical recirculation (52) which at least in the conical region (34) is in contact with the surface of the projection (32) and undergoes a deflection dependent on the position of the projection (32).

5. The spring element according to any of claims 2 to 4, **characterized in that** the cylinder head (44) includes a bore (46) extending in longitudinal direction of the cylinder (40) and that the mechanical recirculation (52) of the height regulating valve (210) or of the height sensor (50) is located in a bore of the cylinder head (44) extending almost vertically thereto.

6. The spring element according to any of the preceding claims, **characterized in that** the emergency spring (20) is integrated in the spring strut such that the overall length of the spring strut is not increased by the emergency spring (20).

## Revendications

1. Elément de ressort (10) avec une jambe de force hydropneumatique pour l'agencement entre le bogie et la superstructure d'un véhicule sur rails, la jambe de force comprenant un piston (30) réceptionné de façon coulissante dans un cylindre (40), le piston (30) ou le cylindre (40) pouvant être lié au bogie et l'autre des composants à la superstructure, et la chambre de piston (42) du cylindre (40) étant en liaison avec un accumulateur de pression (140),
**caractérisé en ce que**
la jambe de force hydropneumatique comprend une vanne hydraulique de réglage de hauteur (210) ou un capteur de hauteur (50) en liaison ou pouvant être relié avec un circuit régulateur, au moyen duquel la position du piston (30) dans le cylindre (40) peut être réglée ou enregistrée,
un ressort de secours (20) étant prévu, lequel est disposé de façon concentrique par rapport à la jambe de force et entoure le cylindre (40) de la jambe de force, et le ressort de secours (20) étant pré-tendu au moyen d'un cylindre hydraulique (200), qui est en liaison avec la chambre de piston (42) du cylindre (40) de la jambe de force.

2. Elément de ressort selon la revendication 1, **caractérisé en ce que** la vanne de réglage de hauteur (210) et le capteur de hauteur (50) présentent un retour (52) mécanique, qui subit une modification d'état dépendante de la position du piston (30) uniquement ou également dans la plage de réglage de la jambe de force.

3. Elément de ressort selon la revendication 2, **caractérisé en ce que** le retour (52) mécanique envoie un signal dépendant de la position du piston (30) exclusivement dans la plage de réglage de la jambe de force, alors que la position du retour (50) mécanique est constante au-dessus et au-dessous de la plage de réglage.

4. Elément de ressort selon l'une quelconque des revendications précédentes, **caractérisé en ce que** le piston (30) présente une embase (32) de conception conique au moins par endroits et **en ce que** la vanne de réglage de hauteur (210) et le capteur de hauteur (50) présentent un retour (52) mécanique qui est en contact avec la surface de l'embase (32) au moins dans la zone (34) conique et subit une déviation dépendante de la position de l'embase (32).

5. Elément de ressort selon l'une quelconque des revendications 2 à 4, **caractérisé en ce qu'**un alésage (46) s'étendant dans la direction longitudinale du cylindre (40) est disposé dans la tête de cylindre (44) et **en ce que** le retour (52) mécanique de la vanne de réglage de hauteur (210) ou du capteur de hauteur (50) se trouve dans un alésage, s'étendant perpendiculairement au retour, de la tête de cylindre (44).

6. Elément de ressort selon l'une quelconque des revendications précédentes, **caractérisé en ce que** le ressort de secours (20) est intégré dans la jambe de force de telle sorte que la longueur de construction de la jambe de force n'est pas agrandie par le ressort de secours (20).
